# EUROPEAN PATENT APPLICATION

(11) **EP 0 933 537 A2**
(43) Date of publication of application: **04.08.1999**
(21) Application number: 99300537.0
(22) Date of filing: 26.01.1999
(51) Int. Cl.: F16B 21/10, F16B 5/02, F02M 35/10

(54) **Fixing articles together**

(30) Priority: 31.01.1998 GB 9802058
(71) Applicant: McKechnie UK Limited, Walsall, West Midlands WS9 8DS (GB)
(72) Inventor: Martin, Paul Alfred, Walsall, West Midlands WS2 0NW (GB); Perry, Colin Brian, Swansea, West Glamorgan SA4 3EZ (GB)
(74) Representative: Barnfather, Karl Jon, Dr.

(57) **Abstract**

A method of fixing a plastics article (16) to a metal article (18) in sealed relationship comprises providing the metal article with a plurality of projecting grooved pins (12), threading the pins through pre-formed bores in the plastics article, and engaging a separate and corresponding spring clip (14) with each pin (12), each clip (14) being arranged to be in compression between the pin (12) and the plastics article (16) and urging the same into said relationship.

## Description

This invention relates to devices and methods for fixing articles together, more specifically but not exclusively plastics inlet manifolds to cylinder heads of I.C. engines in automotive applications.

The method used with metal manifolds is simply to provide bolts passing through apertured lugs in the manifold. The stiffness of the metal casting minimises the number of these which is required. Where a plastics inlet manifold is employed, the inevitable flexibility of the material, calls for a larger number of fixings and the location of these, together with the need for free access to them creates problems in design as well as in assembly. The compressibility of the plastics material also means that the use of simple bolts passing through bores in the manifold is unsatisfactory and it is usually necessary to provide liners for the holes onto which the bolts can be tightened.

The object of the present invention is to provide improvements.

According to the invention a method of fixing a plastics article to a metal article in sealed relationship comprises providing the metal article with a plurality of projecting grooved pins (as hereinafter defined), threading the pins through pre-formed bores in the plastics article, and engaging a separate and corresponding spring clip with each pin, each clip being arranged to be in compression between the pin and the plastics article and urging the same into said relationship.

Another aspect of the invention provides an assembly for fitting a plastics article to a metal article comprising a grooved pin having a groove near one end and means for attaching the pin to a metal article in use at the other end, and a spring clip locatable in the groove in use so as to fix the relationship of the plastics article and metal article.

A grooved pin for the purposes of the invention can have a single parallel sided groove near its free end so as to provide an axial abutment for an engaging clip. However, a headed pin will serve in the same way, and is intended to be included in the scope of the term "grooved pin" for the purposes of this specification.

The clip may be of sheet metal, bent into a substantially U shape; the two limbs are pierced in alignment, one with a larger hole and the second limb with a key-hole. The first limb is located against the article when the invention is employed, and threaded by the free end of the pin in a short axial movement of the clip. The second limb is then likewise engaged/threaded passing the end of the pin through the larger part of the keyhole. A lateral movement, when the keyhole is registered with the groove, engages the clip axially, by taking the narrow part of the keyhole into the groove, due to the dimensions of that narrow part relating to the dimension of the pin at the base of the groove. The clip is thus fixed axially, and the springy abutment of the first limb against the face of the plastics article holds it in position with the requisite pressure.

It will be seen that only a short axial movement of the clip is necessary, and this gives the article designer freedom. For example, where the article is an inlet manifold, inlet pipes may follow any desired path to ports located at the cylinder head/manifold interface, and clips may be accessed between such pipes and the head at any position.

Preferably the pins are made so as to be anchored in blind bores in the metal component, e.g. cylinder head. To this end each pin may terminate, at the end opposite to the groove, in a helically toothed portion, apt to be pressed into such a blind bore and to broach complementary teeth in the metal surrounding the bore. The teeth on the pin end may be formed by a knurling operation, and subsequently hardened. The pin end portion which carries the teeth may be of enlarged diameter. The metal component may be formed with appropriate bores to receive the pins for example by a casting operation or machining, but screw-tapping is avoided.

The pin can also have a lobed end having two or more radially protruding lobes, each separated by a groove, which lobes are physically displaced circumferentially on insertion into the hole in the metal article thereby to provide a good mechanical fit in the hole. Preferably three lobes are provided. Additionally however, the pin can comprise a self tapping end such as for example a threaded region having a transverse slot therethrough which exposes parts of the threading thereby to provide a cutting face for tapping into a hole in a metal block.

It will be appreciated by those skilled in the art that generally similar techniques may be applied to the fixing of for example a crank case to the underside of the cylinder block, using pins threaded through the crank case after being fixed to the cylinder block.

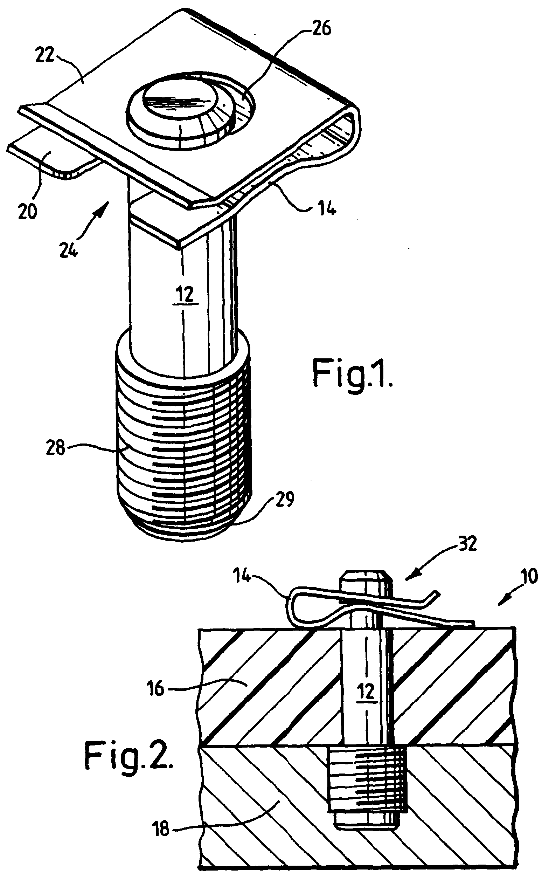

An example of the invention will now be described, by way of example only, with reference to the accompanying drawings, in which:-
FIGURE 1 is a perspective view an assembled pin and clip according to the invention with the plastics and metal article removed;
FIGURE 2 is a schematic sectional side elevational view of an assembled pin and clip attached to a plastics and metal article according to the invention;
FIGURE 3 is a pin for use in accordance with the invention;
FIGURE 4 is a schematic side elevation view of a clip for use in accordance with the invention.
FIGURE 5 shows a schematic side elevation view of the end of a second embodiment of a pin according to the invention;
FIGURE 6 is a schematic end elevation view from below of the pin showing Figure 5;
FIGURE 7 is a schematic side elevation view of a third embodiment of a pin according to the invention; and
FIGURE 8 is a schematic end elevation view from below of the pin shown in Figure 7.

Referring to the drawings, there is shown an assembly 10 according to the invention comprising a pin 12 and clip 14 operably used to fasten a plastics article 16 to a metal article 18.

Clip 14 can be formed from resilient material such as a bent piece of sheet metal substantially to form a U-shape comprising a first or lower limb 20 and a second or upper limb 22. First limb 20 comprises a receiving slot or keyhole 24 and second limb 22 comprises an aperture 26.

Pin 12 comprises a threaded end 28 for locating in metal article 18, and a groove 30 adjacent its free end 32. Pin 12 has a length L between threaded end 28 and groove 30 equal to the thickness of plastics article 16. End 28 can comprise a pilot or guide portion 29 of smaller diameter to assist with locating pin 12 in a hole during assembly.

To form assembly 10, pin 12 is located in metal article 18 and plastics article 16, having a preformed aperture, is located on pin 12. Clip 14 is positioned in groove 30 by passing the keyhole 24 of first limb 20 about the groove followed by a lowering second limb 22 and moving clip 14 laterally so that the groove 30 is engaged by part of limb 22 which defines aperture 26. The resilient nature of clip 14 thereby effects an axial retaining force on article 16, pressing it against article 18.

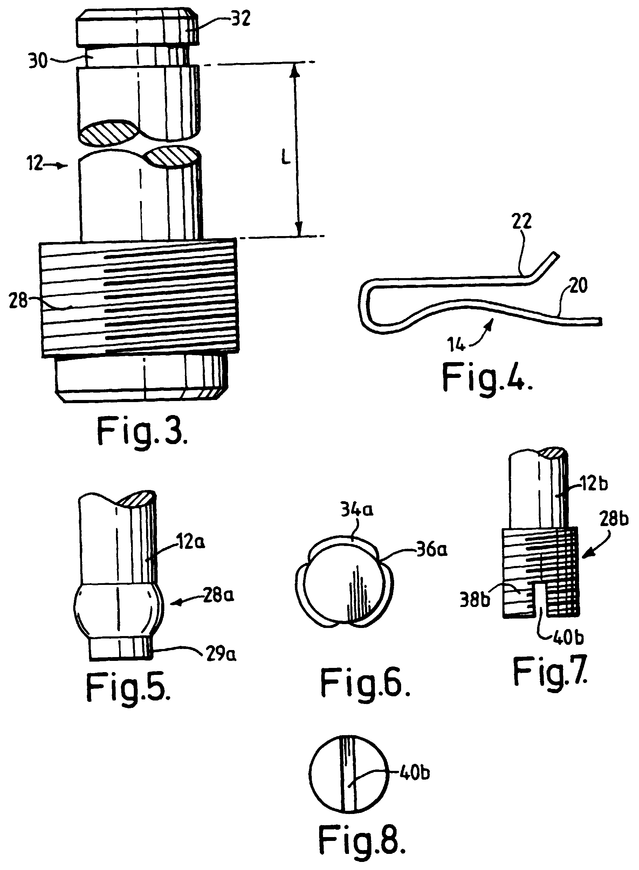

Referring to Figures 5 and 6, there is shown a second embodiment of a pin 12a according to the invention wherein only the lower end 28a is shown (top upper end being similar to pin 12). In this embodiment end 28a for attachment to substrate 18 such as an engine block, comprises lobes 34a separated by grooves 36a. Additionally end 28a comprises a pilot portion 29a for guiding the pin 12a into a hole in an article 18. The diameter of the lobes 34a is slightly greater than the diameter of the hole into which end 28a is intended to be received in use. Accordingly, on insertion of pin 12a into a hole, lobes 34a spread circumferentially into grooves 36a and provide a tight frictional fit within the hole.

Referring to Figures 7 and 8, there is shown a third embodiment of a pin 12b according to the invention wherein pin 12b comprises an end 28b comprising threading 38b and a slot 40b. The slot 40b exposes the threading 38b at the edges of the slot and these exposed regions of the threading effect self tapping by threaded end 28b on rotational insertion of pin 12b into a hole.

## Claims

1. A method of fixing a plastics article to a metal article in sealed relationship comprises providing the metal article with a plurality of projecting grooved pins, threading the pins through pre-formed bores in the plastics article, and engaging a separate and corresponding spring clip with each pin, each clip being arranged to be in compression between the pin and the plastics article and urging the same into said relationship.

2. A method according to Claim 1 wherein the spring clip comprises two portions resiliently biased away from one another and wherein the method of fixing a plastics article further comprises of the steps of locating the first portion against the plastics article and engaging the second portion of the clip in the groove of the pin.

3. A method according to Claim 2 wherein the spring clip comprises a substantially U shaped member, the limbs of which form the first and second portions and wherein the first portion comprises a slot and the second portion comprises an aperture such that location of the spring clip into engagement with the pin and plastics article can be achieved by sliding the end of the pin into the slot of the first portion followed by passing the second portion over the pin so that the pin protrudes over the aperture and then laterally moving the clip so that the second portion engages the groove of the pin.

4. An assembly for fitting a plastics article to a metal article comprising a grooved pin having a groove near one end and means for attaching the pin to a metal article in use at the other end, and a spring clip locatable in the groove in use so as to fix the relationship of the plastics article and metal article.

5. An assembly according to Claim 4 wherein the pin comprises a parallel sided groove near one end, and preferably only a single groove.

6. An assembly according to Claims 4 or 5 wherein the clip comprises substantially a U shape.

7. An assembly according to Claim 6 wherein the U shaped clip comprises first and second portions forming the two limbs of the clip and wherein a first portion comprises a slot and the second portion comprises an aperture at least partially aligned with the slot so as to enable the pin to pass through both the slot and aperture.

8. An assembly according to any of Claims 4 to 7 wherein the pin comprises a grooved end for attachment to the metal block through frictional co-operation between the grooved end and sides of the hole in the metal block into which the pin is located in use.

9. An assembly according to any of Claims 4 to 8 wherein the pin comprises a lobed end having two or more lobes separated from one another by a groove enabling displacement of part of the lobe into the groove due to mechanical attachment of the lobed end of the pin into a hole in a metal block in use.

10. An assembly according to any of Claims 4 to 8 wherein the pin comprises a threaded end enabling self tapping by the pin on insertion into a hole in a metal object.

11. An assembly according to Claim 10 wherein the threaded end comprises a transverse slot which exposes edges of the threading of the end to provide a cutting face.

12. An assembly according to any of Claims 4 to 11 wherein the pin comprises a pilot portion at the end opposite to the grooved end thereby to enable location of the pin in a hole in a metal object in use.

13. An engine block for an internal combustion engine comprising a metal block and plastics manifold such as an air intake manifold, attached to the metal block by an assembly according to any of Claims 4-12.
